Europäisches Patentamt

European Patent Office

Office européen des brevets

(11) Publication number: **0 201 266 B1**

# EUROPEAN PATENT SPECIFICATION

(45) Date of publication of patent specification: **12.07.89**

(21) Application number: **86303237.1**

(22) Date of filing: **29.04.86**

(51) Int. Cl.⁴: **A 23 B 7/144,** A 23 B 7/152, A 23 B 7/10, A 23 B 7/156

(54) Preservation of vegetable foodstuffs.

(30) Priority: **01.05.85 GB 8511106**
**18.11.85 GB 8528313**
**24.01.86 GB 8601715**

(43) Date of publication of application:
**12.11.86 Bulletin 86/46**

(45) Publication of the grant of the patent:
**12.07.89 Bulletin 89/28**

(84) Designated Contracting States:
**AT BE CH DE FR GB IT LI LU NL SE**

(56) References cited:
**BE-A- 545 875**
**DE-A-1 088 788**
**FR-A-1 467 498**
**FR-A-2 144 699**
**FR-A-2 181 458**
**FR-A-2 269 875**
**GB-A- 204 035**
**GB-A-2 059 248**
**US-A-2 620 277**
**US-A-2 709 657**

(73) Proprietor: **VETOSTAR LIMITED**
**Homeleigh Downham Road**
**Watlington King's Lynn Norfolk (GB)**

(72) Inventor: **Howard, John George**
**Homeleigh Downham Road**
**Watlington King's Lynn Norfolk (GB)**

(74) Representative: **Wain, Christopher Paul et al**
**A.A. THORNTON & CO. Northumberland House**
**303-306 High Holborn**
**London WC1V 7LE (GB)**

(56) References cited:
**FOOD TECHNOLOGY, vol. 34, no. 7, July 1980, pages 65-74, Institute of Food Technologists, Chicago, Illinois, US; A. KRAMER et al.: "A gas-exchange process for extending the shelf life of raw foods"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of treating vegetable foodstuffs to preserve them, and to hermetically sealed containers of vegetables so treated.

Raw fresh vegetables are usually preserved by freezing or dehydration, in which case the foodstuff is not sterile, or by canning which involves sterilization by heat and leaves the foodstuff in a more or less cooked state. These methods are energy-intensive and freezing or canning may require high initial expenditure on equipment. The generally preferred method, freezing, not only requires initial expenditure and a great deal of energy for the preliminary treatment, but the frozen products must be transported and stored in a frozen condition. They require a continual input of energy to maintain them fresh, which energy is supplied through expensive installations.

A number of methods of treating foodstuffs have been proposed. For example Belgian Patent 545875 suggests treatment of a foodstuff by ambient temperature treatment with an acidic solution e.g. sulphur dioxide. This however suffers a number of disadvantages, amongst which are the fact that the lack of blanching leads to exudation of vegetable juices from the treated foodstuff on storage, and that the low acidity level taught in the patent gives rise to a low but discernable risk of pathogenic bacteria, such as *Clostridium botulinum*, developing during storage.

It has also been proposed, in British Patent Specification No. 2059248 to treat a foodstuff with sodium metabisulphite solution to prevent its oxidation and then preserve the foodstuff by a subsequent pasteurisation step after the foodstuff is packaged. The need for pasteurisation is a disadvantage of this process since it requires a great deal of energy input and does not prolong the shelf life to a sufficiently large degree.

Other methods are also known, but all suffer one or more of the above disadvantages.

We have now devised a way of treating foodstuffs to preserve them, which method overcomes the above disadvantages and does not necessitate high energy or equipment costs and which can particularly, but not exclusively be used to preserve seasonal vegetables in a form as if they were raw and fresh.

According to the invention there is provided a method of treating a vegetable foodstuff with sulphur dioxide or a liquid analogue thereof to preserve it, characterised in that it comprises the steps of blanching the vegetable foodstuff by treatment in aqueous liquid at a suitably elevated temperature, treating the foodstuff in a solution of pH of 4.8 or less, which solution contains one or more non-toxic or food acids, treating the foodstuff with sulphur dioxide or a liquid analogue thereof either subsequently to or contemporaneously with the acidification and blanching steps, then sealing the treated and cooled foodstuff in a sterile container in the absence of oxygen.

In the present specification, we refer to the treatment of vegetable foodstuffs to preserve them. By this we mean extending the shelf-life of the foodstuff. The extended shelf-life may be very long indeed, or relatively short but will always be significantly greater than that of the untreated foodstuff.

In the method of the invention, the foodstuff to be treated may be raw (i.e. uncooked). The invention is particularly (but not exclusively) useful with raw vegetables, especially potatoes which are of large bulk in the quantities used, and consequently great in high energy storage costs.

The pH of the treated foodstuff must generally be no more than about 4.8, and this acidity is provided in accordance with a feature of the invention by one or more food acids or other organoleptically acceptable non-toxic acids. Among the acids which may be used are acetic, malic, fumaric, adipic, ascorbic, succinic, citric and phosphoric acids or, of course, any two or more of any of these acids. The foodstuff may be contacted with the acid(s) before the bacteriostasis or sterilisation treatment, or simultaneously therewith if a solution (as opposed to gas) treatment is being effected. The acidity is provided essentially by the acids described, although the bacteriostasis or sterilisation treatment may have some small effect on the acidity.

The treated foodstuff is hermetically sealed in a container. Whilst any sort of container can be used, we much prefer to use a heat-sealable thermoplastic material container, because these are convenient and very satisfactory. As will be well understood, the gas and vapour permeabilities of these containers depends on the thermoplastic material(s) used, and the shelf life of the treated foodstuff of the invention will in general be reduced if it is exposed to oxygen permeating into the container. In general, as will be appreciated, we prefer to use low oxygen permeability materials which are resistant to sulphur dioxide and carbon dioxide, such as containers made of laminates of nylon and polyethylene, laminates of polyester and polyethylene and extrusions of ethylene vinyl acetate copolymer with linear low-density polyethylene, for example. It is possible, of course, to use materials of rather higher permeability such as polyethylene but often this will not give the product a long enough shelf-life. Conversely, materials can be used which have a lower permeability than for example nylon and polyethylene, but such materials (e.g. laminates including PVdC) tend to be expensive. Even lower permeability materials, such as metallised film laminates, can also of course be used but these have the disadvantage of being opaque and thus preventing visual inspection (by the purchaser or user) of the foodstuff packed therein. In general, the packaging material used will be chosen to provide an adequate shelf-life at minimum cost. The treated foodstuff should, of course, be sealed into its container in the absence of oxygen.

The bacteriostasis or sterilisation treatment is effected either using sulphur dioxide gas, or a liquid analogue thereof, for example sodium metabisulphite solution. We prefer to sterilise, but for certain foodstuffs it is sufficient to achieve bacteriostasis, so that any micro-organisms still present will not grow and thus the foodstuff is safe and has a shelf life.

For the treatment of foodstuffs according to the invention with sulphur dioxide gas, a preferred method comprises the steps of placing the pre-blanched foodstuff in an open container of heat-sealable thermoplastic material; flushing the foodstuff with carbon dioxide gas; subsequently evacuating the carbon dioxide gas from the foodstuff; flushing the foodstuff with sulphur dioxide gas; evacuating the sulphur dioxide gas from the foodstuff; and heat-sealing the container.

The initial flushing of the foodstuff with carbon dioxide gas serves to penetrate the plant or animal tissue of the foodstuff and drive out residual air. The carbon dioxide also promotes the germination of any bacterial spores within the foodstuff and thus facilitates their subsequent destruction by sulphur dioxide.

The sulphur dioxide kills yeast, moulds and bacterial cells and spores within ten minutes. It also inactivates enzymes such as polyphenol oxidase.

The initial flushing with carbon dioxide gas and subsequent flushing with sulphur dioxide gas may advantageously be combined by flushing with a mixture of carbon dioxide and sulphur dioxide gases, for example 5% sulphur dioxide in carbon dioxide.

The final evacuation must be for a time long enough to ensure that the residual level of sulphur dioxide is lower for each foodstuff than the maximum level permitted for that product by the relevant food regulations (currently in U.K. the Preservation of Food Regulations 1979—1982). Ideally the level should be less than 100 parts per million, at which level the presence of sulphur dioxide can only be detected organoleptically (tasted) in delicately flavoured foods. A level of 110 mg per litre has been found by trial to decrease to 50 mg per litre after fourteen days storage; 50 mg per litre is the maximum level currently permitted in potatoes by the U.K. Regulations.

The energy required in preserving foodstuffs by this method is about half that required for freezing or canning the same amount of food. The method can be used to allow produce to be rendered stable for a much lower initial capital cost.

Preferably, the foodstuff is pre-prepared before treating, for example peeled and sliced or diced.

Preferably, the foodstuff is blanched by heating in an acidic aqueous solution containing permitted acid and optionally also salt. By "permitted acid" is meant the food acids etc. listed above. Soaking for a period in the region of ten minutes may be sufficient. The pH of the solution should preferably not have risen above 4.0 and the pH of a macerate of the foodstuff particles should preferably not exceed 5.5. A solution of 0.02% acetic acid and 1% salt may be used. The amount of acid may be adjusted to bring the pH of the prepared solution to 3.7. The ratio of foodstuff to solution is preferably in the region of 1:2. After being soaked, the foodstuff is thoroughly drained and cooled and can then be placed in heat-sealable containers. The containers may be flxible or semirigid and can be pouches or trays.

A preferred method of bacteriostasis or sterilisation according to the invention uses a liquid instead of sulphur dioxide gas. The liquids may include solutions of sodium or potassium metabisulphite etc. preferably, the foodstuff is treated in the solution which may also include the permitted acid and, optionally, also salt. In this case, the foodstuff may for example be treated for a period in the region of ten minutes or thereabouts. The permitted acid is one or more of the food acids etc. described above, preferably malic acid.

The foodstuff is preferably blanched by treatment with water at a temperature above 85°C but below 100°C. This serves to remove oxygen from plant cells, inactivate enzymes such as polyphenol oxidase, and prevent subsequent exudation of plant juices. This latter point is particularly important in the case of potatoes. Alternatively and advantageously, the blanching and acid treatment may be combined, so that the treatment is carried out at blanching temperature for a shorter time, e.g. for about 4 minutes at about 90°C. This simplifies the procedure and improves product quality.

One example of a preferred treatment solution contains 0.12%—0.15% sodium metabisulphite and 0.60%—0.70% malic acid. It may optionally contain salt, for example up to 5%. The balance is water. The pH of such a solution is in the range 1.9 to 2.3 and it contains approximately 400—800 mg per litre of total sulphur dioxide.

The ratio of foodstuff to solution is preferably in the region 1:2. A macerate of the product after treatment should have pH less than 4.6 at which spores of major pathogenic bacteria such as *Clostridium botulinum* will not subsequently germinate.

After being treated the foodstuff is well drained, cooled and packed in heat-sealable thermoplastic material, preferably flexible sachets. A high standard of hygiene is maintained during the packing. The thermoplastic material should have suitable properties as hereinbefore described.

Before the packages are heat-sealed, they are desirably evacuated and flushed with carbon dioxide. For example, sachets of foodstuff may be transferred to a vacuum sealer which is evacuated to a vacuum of 850 millibars, and carbon dioxide is then flushed until the vacuum decreases to 250 millibars.

The package is then heat-sealed. For example a sachet may be sealed by impulse heat-seal, two seals on each sachet being preferred as extra guarantee of integrity.

The following Examples illustrate the invention.

## Example 1

10 kg potatoes were peeled, hand trimmed to remove all eyes, passed through a chipping machine to give chips of 10 mm cross-section and slivers removed. The potato chips were then blanched for exactly 5 minutes in a bath heated to a temperature not to exceed 95°C and not to be less than 85°C and which contained for each litre of water:

| | |
|---|---|
| Salt | 12.5 grams |
| Malic acid | 5.5 grams |
| Sodium metabisulphite | 1.1 grams |

Subsequent batches of potatoes were blanched in the same solution, but before blanching the solution was made up to original strength by adding, for each 10 kg of potatoes blanched:

| | |
|---|---|
| Salt | 100 grams |
| Malic acid | 62 grams |
| Sodium metabisulphite | 35 grams |

After blanching the potatoes were dried in ambient air until their temperature reduced to a maximum of 40°C. They were filled into pouches made of a laminate of nylon and polyethylene. They were then put into a vacuum sealer and evacuated to 28 mm of mercury, carbon dioxide flushed into the packs until the vacuum was reduced to 4 mm, and the packs were then sealed by a double impulse sealer.

After sealing, sample packs were checked for acidity and $SO_2$ content. The acidity was found to be in the range 4.6 to 4.8 pH and the $SO_2$ content to be in the range of 100 to 120 mg per litre. A further check on $SO_2$ after 14 days storage showed the level to have reduced to 50 mg/litre. After frying the chips for 4 minutes at 190°C the level was further reduced to 30 mg/litre.

After storage at ambient temperature for 3 months the potatoes were examined and found to be in perfect condition. Again examined after six months the potatoes had lost some colour when raw, but were found to be equal in quality to fresh after frying.

## Example 2

Potatoes diced to 10 mm dice were treated by the process of Example 1, with similar results.

## Example 3

Potatoes sliced to 4 mm thick slices were treated in the same way as in Examples 1 and 2, except that the additions to the initial dip and to the make-up solutions were reduced by 20%. Samples tested after packing were found to have the same levels of $SO_2$ and acid as in the Examples above. Potatoes chipped to 4 mm cross-section, so-called Stringfellow chips, were given the same treatment as sliced potatoes.

## Example 4

Potatoes chipped to 20×10 mm cross-section, so-called Steak Chips, were treated by the process of Example 1, except that the additions to the initial dip and to the make-up solutions were increased by 10% from those used in Example 1 above.

## Example 5

Whole carrots graded from 20 mm to 30 mm diameter of variety Chanteney Red Cored were used. 10 kg of carrots had the crowns removed, were peeled in a carborundum peeler and then blanched for 5 minutes in water of not less than 85°C and not more than 95°C, and containing for each litre of water:

| | |
|---|---|
| Malic acid | 6 grams |
| Vinegar (5% acetic) | 12 grams |
| Salt | 50 grams |
| Sugar | 40 grams |
| Sodium metabisulphite | 2 grams |

Subsequent batches of carrots were blanched in the same solution, but before blanching the solution was made up to strength by adding, for each 10 kg of carrots blanched:

| | |
|---|---|
| Malic acid | 65 grams |
| Vinegar | 130 grams |
| Salt | 100 grams |
| Sugar | 80 grams |
| Sodium metabisulphite | 35 grams |

After soaking, the carrots were treated by air cooling and packing in carbon dioxide atmosphere by the same method as potatoes.

## Example 6

Carrots sliced to 3 mm thick slices were treated in the same way except that the additions to the initial dip and the make-up solutions were reduced by 25%.

## Example 7

Carrots diced to 10 mm were treated as whole carrots except that the additions to the initial dip and the make-up solutions were reduced by 15%.

## Example 8

Parsnips were prepared by the same method as carrots, diced in 10 mm dice, blanched for 5 minutes in a similar dip made-up as that used for the diced carrots, air cooled and vacuum packed by the same method as potatoes.

## Example 9

Swede Turnip was prepared and processed in a similar manner to parsnips.

## Example 10

Yams were sliced and diced and then prepared and processed in a similar manner to potatoes.

## Example 11

Small whole beetroot were peeled by carborundum to have a diameter up to 40 mm, and then treated as whole carrots. Beetroot sliced to 3 mm thickness were treated in the same manner as sliced carrots.

## Example 12

Fresh shelled green peas of variety Canners Perfection were packed within one hour of vining. After winnowing to remove extraneous matter and washing, the peas were soaked for 15 minutes in water at a temperature of 25°C and containing:

| | |
|---|---|
| Malic acid | 0.6% |
| Sodium metabisulphite | 0.1% |
| Salt | 1.0% |
| Sugar | 0.75% |

The peas were then drained and immediately packed in pouches of nylon/polyethylene, which were then evacuated and flushed with $CO_2$ as has been described in the previous Examples. When examined immediately after processing sample peas had pH of 4.84 and contained 100 mg/litre $SO_2$.

Examined one month after processing other sample peas were in sound condition and retained flavour. Three months after processing some colour loss had occurred.

## Example 13

Other leguminous vegetables, namely broad beans and whole green beans were treated and packed by the same method as peas.

## Example 14

Pre-prepared cauliflower florets were washed carefully in cold running water. They were then blanched for three minutes in a solution containing, for each litre of water:

| | |
|---|---|
| Malic acid | 4.0 grams |
| Salt | 15 grams |
| Sodium metabisulphite | 1.0 grams |

Blanching temperature was 80°C. The florets were than allowed to cool to a temperature of 30°C and then packed in pouches which were processed by the same method as were potatoes.

Samples examined immediately after processing had a pH of 4.85 and contained 125 mg/litre of $SO_2$. Tested after three months in storage, the cauliflower was found to have retained its quality.

## Example 15

Flexible containers of potato chips were produced as follows.

Potatoes of the variety Bintje with a dry matter content of 21% and sugar content of 1.5% were peeled and cut into potato chips. The chips were blanched for two minutes in water at 90°C and then rinsed in a cold running water.

The chips were then soaked for ten minutes in aqueous solution containing sodium metabisulphite (0.12%), malic acid (0.60%), salt (5.26%) and water (94.02%).

The chips were then drained and amounts of 220 g each were placed in sachets made of nylon laminated to low-density polyethylene.

The sachets were put in a vacuum sealer and evacuated, flushed with carbon dioxide, and impulse sealed.

The packs were tested for residual content of sulphur dioxide after fourteen days and it was found to be 50 mg per litre.

Samples were incubated for fourteen days at 39°C to check on sterility. Other samples submitted for bacteriological examination were also found to be sterile.

The packs were stored at a temperature of 21°C for six weeks. After frying the potatoes were found to have organoleptic qualities equivalent to freshly peeled potatoes. The sulphur dioxide content reduced to 25 mg per litre after frying.

Similar treatment of the potato chips using a soaking solution which did not contain salt resulted in sterile packs having similarly acceptable properties. The potatoes after frying were found to be less tough on the outside of the chip then those prepared by soaking in the solution containing salt.

## Example 16

Flexible containers of potato chips were produced as described in Example 15 but with the procedure modified to combine the blanching and acid treatment.

The chips were blanched for four minutes at 90°C in aqueous solution containing sodium metabisulphite (0.148%), malic acid (0.695%) and water (99.157%). This solution had pH 2.3 and contained 400 parts par million of sulphur dioxide.

The chips were then removed from the solution and air-cooled to a temperature of not more than 30°C. They were then weighed into packs which were evacuated, flushed with carbon dioxide and sealed as previously described.

We have specifically described the use, in the method of the invention, of certain materials in the bacteriostasis or sterilisation step, which use may be contrary to local laws in certain territories.

## Claims

1. A method of treating a vegetable foodstuff with sulphur dioxide or a liquid analogue thereof to preserve it, characterised in that it comprises the steps of blanching the vegetable foodstuff by treatment in aqueous liquid at a suitably elevated temperature, treating the foodstuff in a solution of pH of 4.8 or less, which solution contains one or more non-toxic or food acids, treating the foodstuff with sulphur dioxide or a liquid analogue thereof either subsequently to or contemporaneously with the acidification and blanching steps, then sealing the treated and cooled foodstuff in a sterile container in the absence of oxygen.

2. A method according to claim 1, characterised by the contemporaneous steps of blanching at elevated temperature, acidification and treatment with a liquid analogue of sulphur dioxide.

3. A method according to either claim 1 or claim 2, characterised in that the liquid analogue of sulphur dioxide is a solution of alkali metal metabisulphite.

4. A method according to any one of the preceding claims, characterised in that the container is a heat sealable container of thermoplastic material.

5. A method according to claim 4, characterised in that the thermoplastic material is a laminate of nylon and polyethylene.

6. A method according to any one of the preceding claims, wherein, before the container is sealed but after the foodstuff has been placed therein, the container is flushed with carbon dioxide gas.

7. A method according to claim 1, wherein the blanched and acidified foodstuff is treated with sulphur dioxide gas and before, or simultaneously therewith, the foodstuff is exposed to carbon dioxide.

8. A method of treating potatoes to preserve them which comprises blanching the potatoes at an elevated temperature in an aqueous solution of sodium or potassium metabisulphite and a food acid or other organoleptically acceptable non-toxic acid, the potatoes after treatment having a pH of not more than 4.8; placing the treated potatoes in a heat-sealable container of thermoplastic material; flushing the container with carbon dioxide gas; and hermetically sealing the container.

9. A method according to claim 8, characterised in that, before treatment, the potatoes are peeled and chipped.

10. A method according to either claim 8 or claim 9, characterised in that the acid is malic acid and in that the elevated temperature is 85—95°C.

## Patentansprüche

1. Verfahren zur Behandlung eines pflanzlichen Nahrungsmittels mit Schwefeldioxid oder einer hierzu analogen Flüssigkeit, um es zu konservieren, dadurch gekennzeichnet, daß es die Stufen umfaßt des Blanchierens des pflanzlichen Nahrungsmittels durch Behandlung in wäßriger Flüssigkeit bei einer geeigneterweise erhöhten Temperatur, des Behandelns des Nahrungsmittels in einer Lösung mit einem pH von 4,8 oder weniger, wobei die Lösung einer oder mehrere nichttoxische oder Lebensmittelsäuren enthält, des Behandelns des Nahrungsmittels mit Schwefeldioxid oder einer hierzu analogen Flüssigkeit entweder anschließend an oder gleichzeitig mit den Ansäuerungs- und Blanchierstufen, danach des Versiegelns des behandelten und gekühlten Nahrungsmittels in einem sterilen Behältnis in Abwesenheit von Sauerstoff.

2. Verfahren nach Anspruch 1, gekennzeichnet durch die gleichzeitigen Stufen des Blanchierens bei erhöhter Temperatur, Ansäuerns und Behandelns mit einer zu Schwefeldioxid analogen Flüssigkeit.

3. Verfahren nach Anspruch 1 oder 2, dadurch gekennzeichnet, daß die zu Schwefeldioxid analoge Flüssigkeit eine Lösung eines Alkalimetallmetabisulphits ist.

4. Verfahren nach einem der vorangehenden Ansprüche, dadurch gekennzeichnet, daß das Behältnis ein heißversiegelbares Behältnis aus einem thermoplastischen Material ist.

5. Verfahren nach Anspruch 4, dadurch gekennzeichnet, daß das thermoplastische Material ein Laminat aus Nylon und Polyethylen ist.

6. Verfahren nach einem der vorangehenden Ansprüche, wobei, bevor das Behältnis versiegelt wird, jedoch nachdem das Nahrungsmittel darin eingebracht wurde, das Behältnis mit Kohlendioxidgas gespült wird.

7. Verfahren nach Anspruch 1, wobei das blanchierte und angesäuerte Nahrungsmittel mit Schwefeldioxidgas behandelt und vorher oder gleichzeitig hiermit das Nahrungsmittel Kohlendioxid ausgesetzt wird.

8. Verfahren zur Behandlung von Kartoffeln, um diese zu konservieren, umfassend des Blanchieren der Kartoffeln bei einer erhöhten Temperatur in einer wäßrigen Lösung von Natrium- oder Kaliummetabisulphit und einer Lebensmittelsäure oder einer anderen organoleptisch annehmbaren, nicht-toxischen Säure, wobei die Kartoffeln nach der Behandlung einen pH von nicht mehr als 4,8 besitzen; das Einbringen der behandelten Kartoffeln in ein wärmeversiegelbares Behältnis aus thermoplastischem Material; das Spülen des Behältnisses mit Kohlendioxidgas und das hermetische Versiegeln des Behältnisses.

9. Verfahren nach Anspruch 8, dadurch gekennzeichnet, daß, vor der Behandlung, die Kartoffeln geschält und geschnitzelt werden.

10. Verfahren nach Anspruch 8 oder 9, dadurch gekennzeichnet, daß die Säure Äpfelsäure ist und daß die erhöhte Temperatur 85—95°C beträgt.

## Revendications

1. Procédé pour traiter un aliment végétal avec du dioxyde de soufre ou un analogue liquide de celui-ci afin de le conserver, caractérisé en ce qu'il comprend les stades de blanchiment de l'aliment végétal par traitement dans un liquide aqueux à une température élevée appropriée, traitement de l'aliment dans une solution ayant un pH de 4,8 ou moins, laquelle solution contient un ou plusieurs acides non toxiques ou alimentaires, traitement de l'aliment avec du dioxyde de soufre ou un analogue liquide de celui-ci soit après soit pendant les stades d'acidification et de blanchiment, puis l'isolement de l'aliment traité et refroidi dans un récipient stérile en l'absence d'oxygène.

2. Procédé selon la revendication 1, caractérisé par les stades simultanés de blanchiment à une température élevée, acidification et traitement avec un liquide analogue au dioxyde de soufre.

3. Procédé selon la revendication 1 ou selon la revendication 2, caractérisé en ce que l'analogue liquide du dioxyde de soufre est une solution d'un métabisulfite de métal alcalin.

4. Procédé selon l'une quelconque des revendications précédentes, caractérisé en ce que le récipient est un récipient soudable à chaud fait d'une matière thermoplastique.

5. Procédé selon la revendication 4, caractérisé . en ce que la matière thermoplastique est un stratifié de nylon et de polyéthylène.

6. Procédé selon l'une quelconque des revendications précédentes, dans lequel, avant que le récipient soit soudé mais après que l'aliment y est été placé, on balaye le récipient avec du dioxyde de carbone gazeux.

7. Procédé selon la revendication 1 dans lequel l'aliment blanchi et acidifié est traité avec du dioxyde de soufre et, avant ou en même temps, l'aliment est exposé à du dioxyde de carbone.

8. Procédé de traitement de pommes de terre pour les conserver qui comprend le blanchiment des pommes de terre à une température élevée dans une solution aqueuse de métabisulfite de sodium ou de potassium et d'un acide alimentaire ou d'un autre acide non toxique convenant du point de vue organoleptique, les pommes de terre ayant, après traitement, un pH ne dépassant pas 4,8; introduction des pommes de terre traitées dans un récipient soudable à chaud fait d'une matière thermoplastique; balayage du récipient avec du dioxyde de carbone gazeux; et soudage hermétique du récipient.

9. Procédé selon la revendication 8, caractérisé en ce qu'avant le traitement, les pommes de terre sont pelées et découpées en frites.

10. Procédé selon l'une des revendication 8 ou 9, caractérisé en ce que l'acide est l'acide malique et la température élevée est de 85—95°C.